(19) Europäisches Patentamt
European Patent Office
Office européen des brevets

(11) **EP 2 326 999 B1**

(12) **FASCICULE DE BREVET EUROPEEN**

(45) Date de publication et mention
de la délivrance du brevet:
**12.06.2013 Bulletin 2013/24**

(21) Numéro de dépôt: **09740500.5**

(22) Date de dépôt: **27.08.2009**

(51) Int Cl.:
**G01C 22/02** (2006.01)          **G05D 1/02** (2006.01)

(86) Numéro de dépôt international:
**PCT/FR2009/051639**

(87) Numéro de publication internationale:
**WO 2010/031938 (25.03.2010 Gazette 2010/12)**

(54) **PROCEDE DE NAVIGATION ET SYSTEME METTANT EN OEUVRE UN TEL PROCEDE.**

NAVIGATIONSVERFAHREN UND SYSTEM ZUM IMPLEMENTIEREN EINES SOLCHEN VERFAHRENS

NAVIGATION METHOD AND SYSTEM FOR IMPLEMENTING SUCH A METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.09.2008 FR 0856335**

(43) Date de publication de la demande:
**01.06.2011 Bulletin 2011/22**

(73) Titulaire: **BALYO**
**75014 Paris (FR)**

(72) Inventeurs:
• **DUVAL, Thomas**
  **75017 Paris (FR)**
• **BRAVO, Raul**
  **75014 Paris (FR)**

(74) Mandataire: **Cabinet Plasseraud**
**52, rue de la Victoire**
**75440 Paris Cedex 09 (FR)**

(56) Documents cités:
**DE-A1- 3 923 458          US-A1- 2006 235 609**
**US-A1- 2007 260 371**

## Description

La présente invention est relative à un support informatique pour programme d'ordinateur mettant en oeuvre un procédé de navigation pour automate, et à un système de navigation mettant en oeuvre un tel procédé.

On connaît notamment par les documents US 2006/235609, US 2007/260371 et DE 3923458 des systèmes de navigation de véhicule. Toutefois, ces systèmes ne sont pas satisfaisants.

On connaît des automates se déplaçant automatiquement tout au long d'un trajet à l'aide de balises placées au sol. Les positions de ces balises peuvent être mémorisées par l'automate afin qu'il puisse corriger les dérives de position dues normalement à l'usure, en se recalant sur la position exacte d'une balise lorsqu'il passe à proximité de ladite balise.

Cependant, dans le domaine de la manutention, des charges importantes portées par l'automate peuvent entraîner des dérives importantes mais temporaires sur le calcul du déplacement de l'automate.

Les systèmes de navigation adaptés pour corriger des dérives dues à l'usure, qui sont des dérives lentes, sont peu adaptés à corriger d'autres dérives qui peuvent se manifester beaucoup plus rapidement. De même, il n'est pas optimal de corriger des dérives lentes avec des dispositifs adaptés pour corriger des dérives rapides pour manque de précision.

Une solution jusqu'ici a été d'utiliser des roues de déplacement sensiblement incompressibles. Cependant, celles-ci ne peuvent que réduire les dérives sans les compenser complètement, et ne résolvent pas le problème fondamental.

La présente invention a notamment pour but de palier ces inconvénients.

A cet effet, la présente invention prévoit notamment un procédé de navigation selon la revendication 1.

Dans divers mode de réalisation de l'invention, on peut éventuellement avoir recours en outre à l'une quelconque des dispositions énoncées dans les revendications dépendantes de la revendication 1.

Selon un autre aspect, l'invention prévoit un système de navigation selon la revendication 4.

Selon cet autre aspect, dans divers modes de réalisation de l'invention, on peut éventuellement avoir recours en outre à l'une quelconque des dispositions énoncées dans les revendications dépendantes de la revendication 4.

Grâce à ces dispositions, un automate peut être contrôlé de manière plus précise et plus fiable.

D'autres caractéristiques et avantages de l'invention apparaîtront au cours de la description suivante d'un de ses modes de réalisation, donné à titre d'exemple non limitatif, en regard des dessins joints.

Sur les dessins :

- la figure 1 est une vue schématique en perspective d'un système de navigation selon une forme de réalisation de l'invention,
- la figure 2 est une vue schématique de dessus d'un automate appartenant au système de navigation de la figure 1,
- la figure 3 est un schéma bloc appartenant au système de navigation de la figure 1,
- la figure 4 est une représentation du fonctionnement interne du contrôleur appartenant au système de navigation de la figure 1,
- la figure 5 est une vue schématique de dessus d'un automate selon le système de navigation de la figure 1,
- la figure 6 est une représentation d'un environnement 2 selon un système de navigation conforme à l'invention, et
- la figure 7 est une vue schématique de dessus d'un automate selon le système de navigation de la figure 1, illustrant les erreurs dues aux dérives.

Sur les différentes figures, les mêmes références désignent des éléments identiques ou similaires.

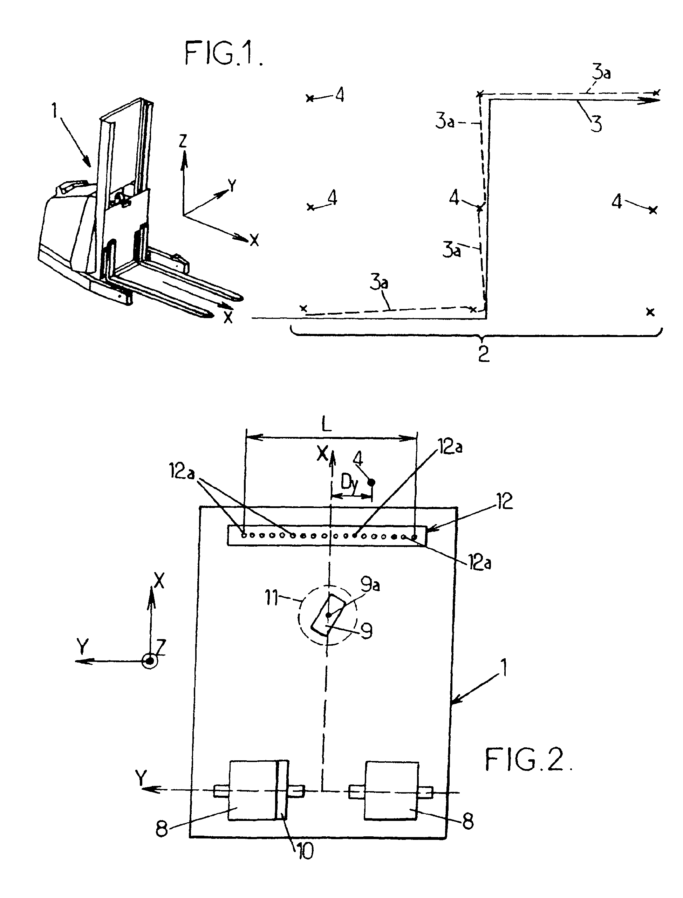

En l'espèce, la figure 1 illustre un mode de réalisation d'un système de navigation d'un automate 1 se déplaçant selon une direction de marche X dans un environnement 2 afin de suivre un trajet 3 prédéterminé, à l'aide d'un ensemble de balises 4. L'automate 1 peut par exemple être un chariot élévateur ou autre.

Ce système est adapté par exemple pour manutentionner des objets dans un environnement industriel tel qu'une usine de production, un entrepôt, un laboratoire ou autre.

L'environnement 2 est doté d'un sol relativement plat sur lequel sont disposées les balises 4. Les balises 4 sont placées dans des positions connues à l'avance et peuvent notamment tracer entièrement ou partiellement un trajet 3 qui doit être suivi par l'automate 1. A titre d'exemple, les balises 4 peuvent être disposées environ tous les 1 à 20 mètres.

Les balises 4 peuvent dans l'absolu être des balises optiques, magnétiques, sonores, ou encore autres. En l'espèce, les balises 4 sont des balises optiques sous forme de fins réflecteurs autocollants apposés sur le sol. De manière alternative, des balises 4 réflectrices en matière polycarbonate d'une épaisseur plus importante, du type utilisé sur des vélos, peuvent être par exemple enfouies dans le sol de façon à affleurer au niveau de la surface du sol. Les balises 4 sont de tailles relativement ponctuelles par rapport aux dimensions de l'automate 1, et peuvent avoir par exemple un diamètre de quelques millimètres.

Les balises 4 peuvent être plus ou moins espacées l'une de l'autre en fonction de conditions prédéterminées.

Par exemple, sur des espaces méritant beaucoup de manoeuvres, il est utile d'avoir des balises 4 plus rapprochées.

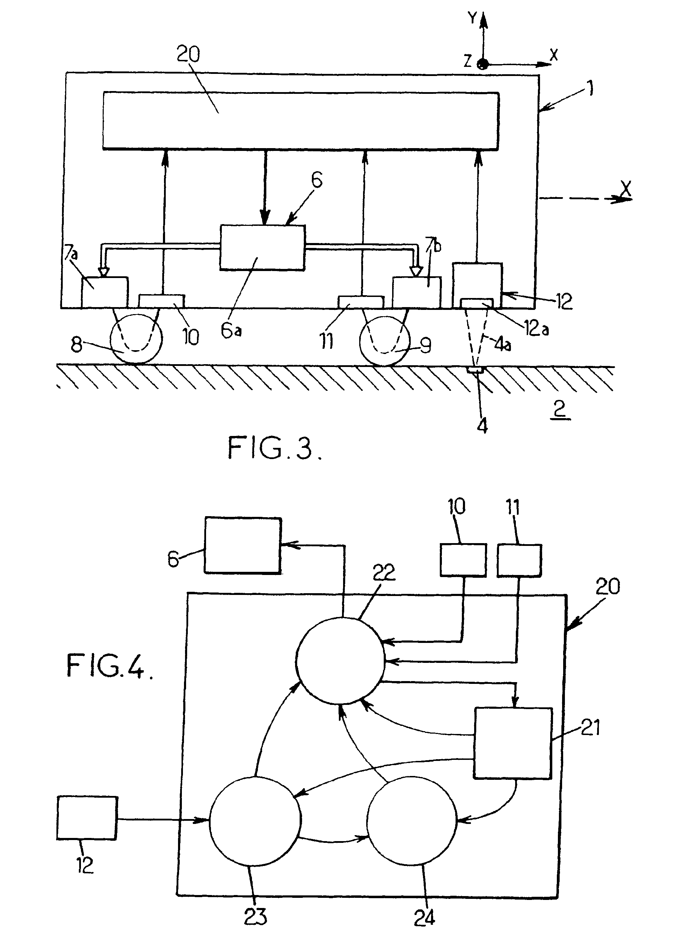

En se référant maintenant aux figures 2 et 3, l'automate est motorisé par un dispositif de déplacement 6. Le dispositif de déplacement 6 comporte par exemple un circuit de commande 6a qui commande :

- un premier moteur 7a adapté pour faire tourner au moins une roue motrice 8 de l'automate 1 de façon à le faire avancer ou reculer selon la direction principale de déplacement X liée à l'automate (lorsque l'automate 1 comporte des roues 8 non directionnelles comme dans l'exemple représenté, la direction X est perpendiculaire à l'axe de rotation Y des roues non directionnelles, et est représenté sur l'axe médian longitudinal de l'automate (1), et
- un second moteur 7b adapté pour orienter au moins une roue directionnelle 9 par pivotement de cette roue directionnelle 9 autour d'un axe de pivotement vertical 9a, afin de diriger l'automate 1 le long de son trajet 3.

De manière alternative, on pourrait également prévoir deux moteurs pour commander un système différentiel de roues adapté pour déplacer et diriger l'automate 1. Tout autre moyen de déplacement est également envisageable.

L'automate 1 dispose en outre d'un premier détecteur de déplacement 10, par exemple sous la forme d'un encodeur relié à l'une des roues motrices 8 afin de détecter les révolutions de ladite roue autour de son axe de rotation horizontal X.

Un deuxième détecteur de déplacement 11, par exemple sous la forme d'un encodeur relié à la roue directionnelle 9, permet de déterminer la direction de l'automate 1 en détectant les pivotements de la roue 9 autour d'un axe vertical 9a.

Les détecteurs de déplacement 10, 11 émettent des signaux permettant d'estimer la position de l'automate 1 au cours de ses déplacements.

Il convient de souligner que le détecteur de déplacement n'est pas indispensable au bon fonctionnement de la présente invention. Par exemple, sur des automates naviguant sur des rails, il est envisageable d'estimer le déplacement par une simple corrélation avec les commandes au dispositif de déplacement.

L'automate 1 dispose en outre d'au moins un détecteur de balises 12 adapté pour détecter les balises 4 à proximité de l'automate 1 tout au long de son trajet 3. Le détecteur de balises 12 est adapté pour déterminer de manière très précise la position de la balise 4 par rapport à l'automate 1, par exemple dans un système de coordonnées à l'automate, avec une précision de moins de 5 millimètres.

Le détecteur de balises 12 s'étend selon une direction transversale à l'automate, par exemple parallèle à la direction Y dans l'exemple représenté, et de préférence sur toute la largeur de l'automate 1 afin d'avoir une largeur de détection plus large.

Bien entendu, le détecteur de balises 12 est adapté à détecter des balises prédéterminées et pourrait donc consister en un détecteur de balises magnétiques, de balises optiques, de balises sonores, ou autres encore selon le type de balise 4. En l'espèce, le détecteur de balises 12 est adapté pour détecter des balises optiques. Ainsi, le détecteur de balises 12 comprend une pluralité de capteurs individuels 12a de balises alignés selon la direction Y et répartis sur toute la largeur L du détecteur de balises, la largeur L pouvant être comprise entre 50 cm et 2 mètres (voir figure 2). Par exemple, chaque capteur de balises 12a comprend une diode laser émettrice orientée sensiblement verticalement et un récepteur adapté pour recevoir une réflexion 4a de la diode émettrice par l'intermédiaire de la balise réfléchissante 4 (voir figure 3).

Le système de navigation comporte en outre un contrôleur 20 adapté pour contrôler le déplacement de l'automate 1 par l'intermédiaire du dispositif de déplacement 6, et pour recevoir des signaux des détecteurs de déplacement 10,11, et du détecteur de balises 12 sur l'automate 1. Lesdits signaux peuvent être réceptionnés bruts par le contrôleur, auquel cas le contrôleur est adapté pour traiter ces signaux, par exemple par un traitement de moyennes corrigées afin de réduire les erreurs de mesures, ou peuvent être réceptionnés par le contrôleur déjà traités par les détecteurs 10,11,12 eux-mêmes.

Dans le mode de réalisation illustré à la figure 3, le contrôleur 20 est intégré dans l'automate 1. Toutefois, en variante, le contrôleur 20 pourra être séparé de l'automate, par exemple logé dans l'environnement, et alors être muni de moyens de communication pour recevoir des signaux des détecteurs 10,11,12 et commander l'automate 1, et plus particulièrement le dispositif de déplacement 6 à distance.

Le fonctionnement interne du contrôleur 20 est illustré schématiquement sur la figure 4.

Le contrôleur 20 comprend un espace mémoire 21 adapté pour répertorier et stocker des données relatives à la commande de l'automate 1, ainsi que des moyens informatiques de traitement, par exemple sous la forme d'au moins un micro-processeur, fonctionnant de manière plus ou moins distincte mais en parallèle l'une de l'autre, afin de définir des modules de commande, à savoir :

- un module principal de déplacement 22 ;
- un module de veille des balises 23 ; et
- un module de correction des dérives 24.

En l'espèce, chacune des balises 4 est connue et répertoriée dans la mémoire 21. Plus particulièrement, pour chacune des balises 4, la mémoire 21 stocke la position exacte de la balise 4 (dans un système de coordonnées globales), et optionnellement des attributs prédéterminés.

Les attributs de chacune des balises peuvent être utiles pour signaler à l'automate un encombrement localisé méritant un ralentissement de déplacement. Un attribut peut aussi être utilisé pour regrouper des sous-ensembles de balises selon des conditions particulières prédéterminées. Enfin, des attributs peuvent être utilisés par le module de correction des dérives 24 pour commander des corrections de dérives à des balises particulières (voir plus bas).

Le module principal de déplacement 22 a pour fonction de réceptionner les signaux des capteurs de déplacement 10,11 ceci par l'intermédiaire d'une fonction mathématique, de préférence une fonction affine, d'estimer une position de l'automate 1. En fonction de la position estimée et du trajet 3 à parcourir, le module de déplacement 22 commande le dispositif de déplacement 6. De plus, à chaque itération de la détermination de la position estimée, le module de déplacement 22 stocke dans la mémoire 21 la position estimée de l'automate 1.

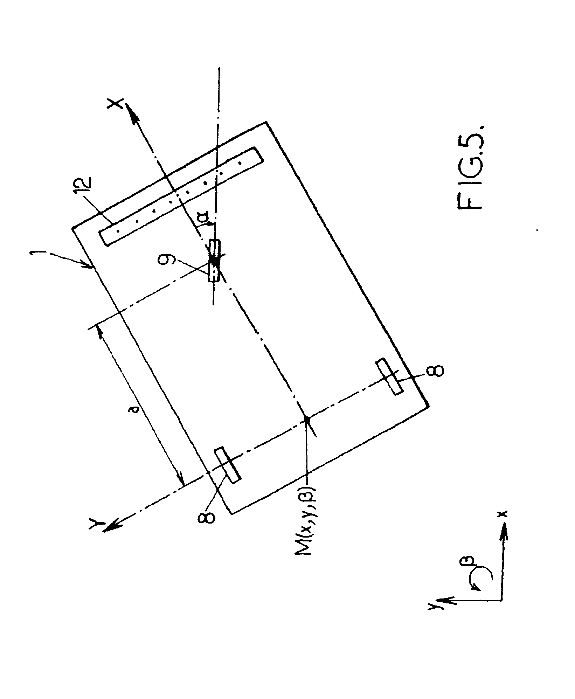

La position estimée 3 de l'automate 1 peut être définie dans un système global de coordonnées (c'est-à-dire fixe par rapport à l'environnement 2), par rapport à une position arbitraire M de l'automate 1, représentée sur la figure 5 comme étant à l'intersection entre l'axe de rotation des roues motrices 8, et le centre longitudinal de l'automate passant à travers le pivot 9a. Les coordonnées globales de position sont ainsi nommées x, y, et l'orientation (ou le cap) de l'automate 1 est nommée $\beta$. L'orientation $\beta$ est toujours parallèle à la direction principale de déplacement X.

En référence à la figure 5, la position estimée 3 de l'automate 1 est alors déductible par fonction mathématique d'estimation de déplacement. Ainsi, le changement de position par unité de traitement, par exemple par unité temporelle, en combinaison avec les signaux des détecteurs de déplacement 10,11 peuvent être représentée comme suit :

$$d\beta = \frac{\sin\alpha}{a}dsa$$

$$dx = \cos\beta \cos\alpha \, dsa$$

$$dy = \sin\beta \sin\alpha \, dsa$$

dans lesquels :

dx, dy, d$\beta$      sont les différentielles de changement de position de l'automate 1 par unité de traitement ;
a      est la distance selon la direction X entre l'axe de rotation des roues motrices 8 et l'axe de pivotement 9a de la roue directionnelle 9 ;
$\alpha$      est l'angle de pivotement de la roue directionnelle 9 par rapport à la direction X ;
dsa      est la distance parcourue par la roue motrice 8 par unité de traitement.

Ainsi, il suffit pour le module de déplacement 22 d'intégrer les différentielles de position dx, dy, d$\beta$ au long du trajet 3 pour pouvoir estimer la position estimée de l'automate 1, x, y, $\beta$, dans le système global de coordonnées.

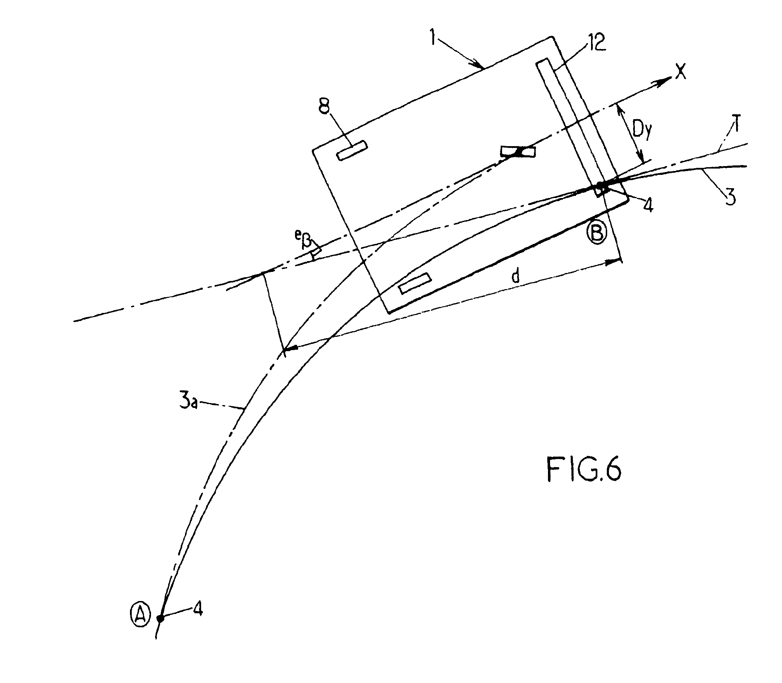

Cependant, au fur et à mesure du déplacement de l'automate 1 dans son environnement 2, la position estimée 3 par le contrôleur 20 dérive progressivement par rapport à la position réelle 3a de l'automate 1, représentée par le trait discontinu sur les figures 1 et 6 ; la trajectoire réelle 3a de l'automate 1 va s'écarter légèrement et progressivement du trajet théorique 3. Cette dérive peut être par exemple un résultat de l'usure des roues ou du changement de température ambiante, qui modifient la relation entre :

- le déplacement selon l'axe X et le nombre de révolutions des roues 8 calculé par l'encodeur 10, et
- les changements de direction réels de l'automate 1 et les pivotements de la roue directionnelle 9 calculés par l'encodeur 11.

De manière générale, de telles dérives restent relativement faibles, de l'ordre de moins de 5 % de la distance parcourue. Ainsi, lorsque l'automate 1 suit son trajet 3 et lorsqu'il détecte la présence d'une balise 4, avec consultation des données de position exacte de toutes les balises 4 stockées dans sa mémoire 21, le contrôleur 20 peut déterminer avec une quasi-certitude de quelle balise 4 il s'agit.

Cependant, des charges importantes et soudaines parvenant sur l'automate 1, par exemple lorsqu'une charge lourde est transportée par le chariot 1 qui aplatit les roues motrices 8, peuvent également amener à des dérives, qui peuvent être de l'ordre de 10 % de la distance parcourue.

Il existe donc deux genres de dérives :

- une dérive lente mais progressive due à une usure générale de l'automate 1,

- ou une dérive rapide mais temporaire et oscillante due à des charges importantes portées par l'automate 1.

Afin de corriger les erreurs de position estimée à cause de ces dérives, le module de veille des balises 23 reçoit du détecteur de balises 12, à l'instant où l'un des capteurs individuels 12a du détecteur de balises 12 franchit la balise 4, une position relative exacte de la balise 4 par rapport à l'automate 1 selon l'axe transversal Y. A cet instant, la position de la balise 4 relative à un système de coordonnées local de l'automate 1 (X, Y) est connue puisque :

- X est égale à la distance selon la direction X entre le détecteur de balises 12 et l'origine du système de coordonnées locale ;
- Y est égale à la position 'Dy' de la balise détectée sur le détecteur de balises 12.

Le module de balises 23 interprète ces données en fonction de la position estimée de l'automate 1 (stockées dans la mémoire 21) pour ainsi corréler la position estimée de l'automate 1 avec la balise 4 détectée dont la position exacte est connue. Ainsi, chaque fois qu'une balise 4 est détectée par le module de balises 23, il est possible de déduire une position exacte de l'automate 1 dans un système global de coordonnées.

Le module de veille de balises 23 transmet les données de la position réelle de l'automate 1 au module de déplacement 22 afin que le module de déplacement 22 puisse actualiser la position estimée par la position réelle et la stocker dans la mémoire 21 afin de recaler sur le trajet réel 3 à suivre.

Il est préférable que le contrôleur 20 puisse en outre anticiper et corriger les dérives afin de pouvoir minimiser le nombre de fois que la position estimée soit actualisée.

La correction de dérive est d'autant plus importante quand l'automate 1 subit des charges qui sont susceptibles de créer des déviations de position conséquentes entraînant l'automate 1 à mal localiser une position précise entre deux balises, par exemple lorsqu'une charge doit être chargée ou déchargée de l'automate 1.

De plus, il est important que le contrôleur 20 puisse distinguer et corriger des dérives séparément selon que ce sont des dérives progressives d'usure ou des dérives temporaires liées à une charge sur l'automate 1.

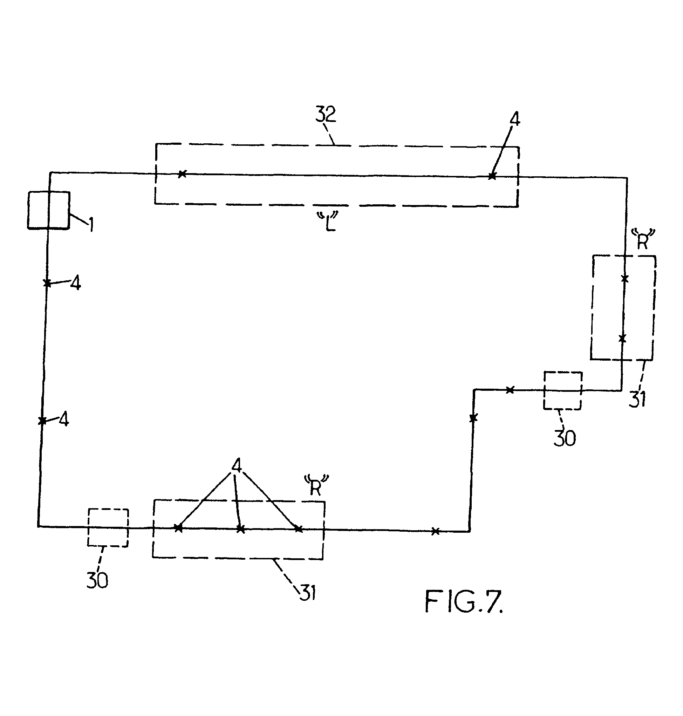

La correction des dérives est expliquée en référence aux figures 4 et 7.

La figure 7 montre schématiquement un automate 1 suivant un trajet 3 défini partiellement par un ensemble de balises 4. Deux zones de manutention 30 sont représentées sur une partie de ce trajet 3. De plus, certaines balises 4 successives parmi l'ensemble de balises sont regroupées en sous-ensembles.

En l'espèce, deux sous-ensemble 31 comprennent trois balises 4 rapprochées ayant un attribut « R » (signifiant dérive rapide). Un troisième regroupement de balises 32 présente un attribut « L » (signifiant dérive lente).

Les sous-ensembles de balises 31 avec l'attribut « R » sont typiquement placés directement après des zones de manutention 30, c'est-à-dire directement après des zones où l'automate 1 est susceptible de recevoir des poids importants susceptibles de créer des dérives non négligeables sur de courtes ou moyennes distances. Les balises 4 de ce sous-ensemble sont espacées l'une de l'autre de plus courtes distances, par exemple de un à trois mètres afin de pouvoir détecter des dérives importantes rapidement.

De même, le sous-ensemble 32 ayant pour attribut « L » est typiquement placé avec des écarts importants entre balises, par exemple entre 10 et 30 mètres afin de pouvoir détecter des dérives lentes dues par exemple à l'usure des roues.

Le contrôleur 20, et plus particulièrement le module 24, est configuré pour n'effectuer la correction des dérives que dans des zones ayant un attribut prédéterminé, par exemple un attribut « L », ou un attribut « R ».

Le module de correction de dérive 24, en fonction des attributs particuliers des balises successives détectées, appliquera des corrections à la fonction mathématique utilisée pour déterminer le déplacement de l'automate 1. En particulier, les dérives détectées dans les zones 31,32 ayant des attributs particuliers de correction de dérives, ici lente « L » ou rapide « R » seront corrigées de manière stable dans la fonction mathématique utilisée pour estimer le déplacement de l'automate 1.

En référence avec les figures 1 et 6, la dérive du vrai trajet 3 est représentée par un écartement de la position estimée 3 par rapport à la position réelle 3a le long du trajet 3. Autrement dit, l'automate 1 poursuit son trajet estimé 3 en écart du trajet réel 3a.

Dans cet exemple, à la position A, le trajet réel 3a de l'automate 1 est identique au trajet estimé 3. Quelques temps plus tard, à la position B, le détecteur de balises 12 de l'automate 1 détecte une balise 4 à une distance de Dy de l'axe médian X de l'automate 1.

Dans le cas où la balise détectée 4 correspond à une deuxième balise successive ayant un même attribut méritant le lancement d'une correction de dérive par le module de correction de dérive 24, en l'espèce « R » ou « L », il est alors possible de déterminer l'erreur de cap ($e_\beta$) de l'automate, correspondant à une erreur statique de l'encodeur directionnel 11 de la roue directionnelle 9. Cette erreur peut être déterminée de la manière suivante :

$$ e_\beta = \text{asin}\left(\frac{Dy}{d}\right) $$

dans lequel d est la distance le long d'une tangente T du trajet estimé 3, pris à la position de la balise 4 détectée, entre la balise 4 et l'intersection de ladite tangente avec l'axe médian (X) de l'automate 1.

L'erreur $e_\beta$ de cap est ensuite directement additionnée sur l'angle d'orientation $\beta$ de l'automate 1 estimée par le module de déplacement 22 pour obtenir une valeur d'angle plus précise au long du fonctionnement de l'automate 1.

L'erreur de distance ($e_X$) due à l'encodeur 10 correspond à une erreur qui est proportionnelle à toute la distance parcourue depuis la dernière balise détectée qui correspond à la dernière position réelle connue. Ce facteur $e_X$ peut être déterminé de la manière suivante :

$$ e_X = \frac{\text{distance réellement parcourue telle que calculée par le controleur 20}}{\text{distance parcourue telle que mesurée par l'encodeur 10}} $$

$e_X$ peut ensuite être appliqué à la proportionnelle en la multipliant aux valeurs de distances déterminées par le module de déplacement 22 depuis les signaux reçus par l'encodeur de distance 10.

Ces facteurs de corrections $e_X$, $e_\beta$ peuvent être imputés sur les fonctions mathématiques d'estimation de position appliquées par le module de déplacement 22 pour déterminer la position estimée de l'automate 1.

Ces fonctions, tenant compte des corrections de dérives, peuvent être représentées comme suit :

$$ d\beta = \frac{\sin \alpha}{a}(dsa \cdot e_x) + e_\beta $$

$$ dx = \cos \beta \cos \alpha \, (dsa.\ e_X) $$

$$ dy = \sin \beta \sin \alpha \, (dsa.\ e_X) $$

dans lesquelles $e_X$ et $e_\beta$ correspondent aux facteurs de correction de distances et de cap comme décrit ci-dessus.

La correction choisie peut être par exemple fonction de l'ampleur de l'actualisation de la position effectuée, c'est-à-dire fonction de la différence entre la position estimée avant actualisation et la position estimée après actualisation (autrement dit, la correction est fonction de l'erreur sur la position estimée).

Il est à noter qu'il n'est pas nécessaire d'effectuer des corrections de dérive à chaque zone 31,32 de balises ayant un attribut (en l'espèce, « R » ou « L ») méritant l'exécution d'une procédure de correction de dérive par le module 24. En effet, le contrôleur 20 peut être programmé pour n'effectuer une correction d'une dérive lente qu'après un certain nombre, par exemple 10, de passages sur des zones 32 ayant un attribut particulier « L », mais au contraire d'effectuer une correction d'une dérive rapide à chaque passage sur des zones 31 ayant un attribut particulier « R ». La fréquence de correction de dérive peut être fonction de l'attribut lui-même.

## Revendications

**1.** Procédé de navigation d'un automate (1) comportant un contrôleur (20) adapté pour mémoriser des données relatives à la positiion de balises (4) et optionnellement des attributs prédéterminés ; lesdits attributs caractérisant des dérives de déplacement de l'automate (1), le procédé consistant à :

(a) estimer la position dudit automate (1) par rapport à un ensemble de balises (4) en fonction d'une position précédemment estimée, de données représentatives du déplacement dudit automate (1), et d'une fonction mathématique d'estimation de déplacement ;

(b) commander le déplacement d'un automate (1) en fonction de la position estimée ;

(c) détecter la présence d'une balise (4) de l'ensemble de balises à proximité dudit automate (1), et,

(d) lors d'une dite détection d'une balise (4), effectuer une actualisation de ladite position estimée en fonction d'une position connue de ladite balise (4) détectée ;

(e) lors d'une détection successive d'au moins deux balises (4) ayant un même attribut prédéterminé parmi au moins deux différents attributs possibles, modifier ladite fonction d'estimation de déplacement en fonction dudit attribut et de ladite actualisation de position effectuée à l'étape (d).

2. Procédé de navigation selon la revendication 1, dans lequel ladite modification à l'étape (e) est fonction d'une différence entre la position estimée avant actualisation et la position estimée après actualisation.

3. Procédé de navigation selon l'une quelconque des revendications précédentes, dans lequel ladite fonction mathématique d'estimation de déplacement est une fonction affine.

4. Système de navigation comprenant :

un automate (1) comprenant :

- un dispositif de déplacement (6) pour déplacer ledit automate dans un environnement,
- au moins un détecteur de balises (12) aptes à détecter des balises (4) à proximité dudit automate,

un contrôleur (20) adapté pour mémoriser pour chacune desdites balises des données relatives à la position et optionnellement à des attributs prédéterminés ; lesdits attributs caractérisant des dérives de déplacement de l'automate (1), ledit contrôleur (20) étant adapté pour mettre en oeuvre de manière répétée les étapes suivantes :

(a) estimer la position dudit automate par rapport audites balises en fonction d'une position précédemment estimée, des données représentatives du déplacement dudit automate(1), et d'une fonction mathématique d'estimation de déplacement ;

(b) commander ledit dispositif de déplacement en fonction de la position estimée ;

(c) détecter, avec le détecteur de balises, la présence d'une balise (4), et,

(d) lors d'une dite détection d'une balise (4), effectuer une actualisation de ladite position estimée en fonction des données dudit détecteur de balises (12) et des données mémorisées de position de ladite balise (4) détectée ;

(e) lors d'une détection successive d'au moins deux balises (4) ayant un même attribut prédéterminé parmi au moins deux différents attributs possibles, modifier ladite fonction mathématique d'estimation de déplacement en fonction d'un attribut desdites balises détectées et de ladite actualisation de position à l'étape (d).

5. Système selon la revendication 4, comprenant en outre au moins un détecteur de déplacement (10 ; 11).

6. Système selon l'une quelconque des revendications 4 à 5, dans lequel le contrôleur (20) appartient à l'automate.

7. Système selon l'une quelconque des revendications 4 à 6, dans lequel le détecteur de balises (12) comprend un détecteur optique, notamment un détecteur à émetteur laser.

8. Système selon l'une quelconque des revendications 4 à 7, dans lequel le détecteur de balises (12) est un détecteur magnétique, notamment un détecteur magnétique à induction ou un détecteur à effet Hall.

9. Système selon l'une quelconque des revendications 4 à 8, dans lequel ladite correction est fonction d'une différence entre la position estimée avant actualisation et la position estimée après actualisation.

10. Système selon l'une quelconque des revendications 4 à 9, comprenant en outre un ensemble de balises (4) disposées au sol dans l'environnement (2) à des positions déterminées, le contrôleur (20) ayant en mémoire, pour chacune desdites balises, des données relatives aux positions des balises (4) et relatives à au moins un attribut, au moins deux balises ayant un attribut différent.

11. Système selon la revendication 10, dans lequel chaque balise (4) est un réflecteur optique.

12. Système selon l'une quelconque des revendications 10 à 11, dans lequel l'ensemble de balises (4) comprend au moins un sous-ensemble de balises (4), chacune des balises (4) dans ledit sous-ensemble ayant un même attribut en fonction de l'espacement entre lesdites balises (4) dudit sous-ensemble.

## Patentansprüche

1. Navigationsverfahren für einen Automaten (1), umfassend eine Steuer-/Regeleinrichtung (20), die dazu ausgebildet ist, Daten, die sich auf die Position von Baken (4) beziehen, und optional vorbestimmte Attribute zu speichern, wobei die Attribute Bewegungsabweichungen des Automaten (1) charakterisieren, wobei das Verfahren darin besteht:

(a) die Position des Automaten (1) in Bezug auf eine Anordnung von Baken (4) zu ermitteln, in Abhängigkeit von einer zuvor ermittelten Position, von Daten, die repräsentativ für die Bewegung des Automaten (1) sind, und von einer mathematischen Funktion zur Ermittlung der Bewegung,
(b) die Bewegung eines Automaten (1) in Abhängigkeit von der ermittelten Position zu steuern,
(c) die Anwesenheit einer Bake (4) von der Anordnung von Baken in der Nähe von dem Automaten (1) zu detektieren, und
(d) bei einer solchen Detektion von einer Bake (4) eine Aktualisierung der ermittelten Position in Abhängigkeit von einer bekannten Position der detektierten Bake (4) durchzuführen,
(e) bei einer aufeinander folgenden Detektion von wenigstens zwei Baken (4) mit einem gleichen vorbestimmten Attribut von wenigstens zwei unterschiedlichen möglichen Attributen, die Funktion zur Ermittlung der Bewegung in Abhängigkeit von dem Attribut und von der Aktualisierung der Position, die im Schritt (d) durchgeführt wird, zu modifizieren.

2. Navigationsverfahren nach Anspruch 1, wobei die Modifikation im Schritt (e) von einer Differenz zwischen der ermittelten Position vor der Aktualisierung und der ermittelten Position nach der Aktualisierung abhängt.

3. Navigationsverfahren nach einem der vorhergehenden Ansprüche, wobei die mathematische Funktion zur Ermittlung der Bewegung eine affine Funktion ist.

4. Navigationssystem, umfassend:

einen Automaten (1), umfassend:

- eine Bewegungseinrichtung (6), um den Automaten in einer Umgebung zu bewegen,
- wenigstens einen Baken-Detektor (12), der dazu geeignet ist, Baken (4) in der Nähe von dem Automaten zu detektieren,

eine Steuer-/Regeleinrichtung (20), die dazu ausgebildet ist, für jede der Baken Daten zu speichern, die sich auf die Position und optional auf vorbestimmte Attribute beziehen, wobei die Attribute Bewegungsabweichungen des Automaten (1) charakterisieren, wobei die Steuer-/Regeleinrichtung (20) dazu angepasst ist, um in wiederholter Weise die folgenden Schritte durchzuführen:

(a) die Position des Automaten in Bezug auf die Baken zu ermitteln, in Abhängigkeit von einer zuvor ermittelten Position, von Daten, die repräsentativ für die Bewegung des Automaten (1) sind, und von einer mathematischen Funktion zur Ermittlung der Bewegung,
(b) die Bewegungseinrichtung in Abhängigkeit von der ermittelten Position zu steuern,
(c) die Anwesenheit einer Bake (4) mit dem Baken-Detektor zu detektieren, und
(d) bei einer solchen Detektion von einer Bake (4) eine Aktualisierung der ermittelten Position in Abhängigkeit von den Daten des Baken-Detektors (12) und den gespeicherten Positions-Daten der detektierten Bake (4) durchzuführen,
(e) bei einer aufeinander folgenden Detektion von wenigstens zwei Baken (4) mit einem gleichen vorbe-

EP 2 326 999 B1

stimmten Attribut von wenigstens zwei unterschiedlichen möglichen Attributen, die mathematische Funktion zur Ermittlung der Bewegung in Abhängigkeit von einem Attribut der detektierten Baken und von der Aktualisierung der Position im Schritt (d) zu modifizieren.

**5.** System nach Anspruch 4, weiterhin umfassend wenigstens einen Bewegungsdetektor (10; 11).

**6.** System nach einem der Ansprüche 4 bis 5, wobei die Steuer-/Regeleinrichtung (20) zu dem Automaten gehört.

**7.** System nach einem der Ansprüche 4 bis 6, wobei der Baken-Detektor (12) einen optischen Detektor, insbesondere einen Detektor mit Laser-Emitter umfasst.

**8.** System nach einem der Ansprüche 4 bis 7, wobei der Baken-Detektor (12) ein Magnet-Detektor ist, insbesondere ein Induktions-Magnet-Detektor oder ein Halleffekt-Detektor.

**9.** System nach einem der Ansprüche 4 bis 8, wobei die Korrektur von einer Differenz zwischen der ermittelten Position vor der Aktualisierung und der ermittelten Position nach der Aktualisierung abhängt.

**10.** System nach einem der Ansprüche 4 bis 9, weiterhin umfassend eine Anordnung von Baken (4), die auf dem Boden in der Umgebung (2) an bestimmten Positionen angeordnet sind, wobei die Steuer-/Regeleinrichtung (20) im Speicher für jede der Baken Daten hat, die sich auf die Positionen der Baken (4) beziehen, und die sich auf wenigstens ein Attribut beziehen, wobei wenigstens zwei Baken ein unterschiedliches Attribut haben.

**11.** System nach Anspruch 10, wobei jede Bake (4) ein optischer Reflektor ist.

**12.** System nach einem der Ansprüche 10 bis 11, wobei die Anordnung von Baken (4) wenigstens eine Unteranordnung von Baken (4) umfasst, wobei jede der Baken (4) in der Unteranordnung ein gleiches Attribut in Abhängigkeit von dem Abstand zwischen den Baken (4) der Unteranordnung aufweist.

**Claims**

**1.** Method of navigating an automaton (1) comprising a controller (20) configured to memorise data relating to the position of markers (4) and optionally predetermined attributes; said attributes characterising deviations in the motion of the automaton (1), which method consists in:

(a) estimating the position of said automaton (1) relative to a set of markers (4) as a function of a position previously estimated from data representative of the motion of said automaton (1) and a mathematical motion estimation function;
(b) commanding the motion of an automaton (1) as a function of the estimated position;
(c) detecting the presence of one marker (4) of the set of markers in the proximity of said automaton (1); and
(d) on said detection of a marker (4), updating said estimated position as a function of a known position of said detected marker (4);
(e) on a successive detection of at least two markers (4) having a same attribute predetermined from at least two different possible attributes, modifying said motion estimation function on the basis of said attribute and said position update applied in step (d).

**2.** Navigation method as claimed in claim 1, in which said modification in step (e) is applied out on the basis of a difference between the estimated position prior to updating and the estimated position after updating.

**3.** Navigation method as claimed in any one of the preceding claims, in which said mathematical motion estimation function is a affine function.

**4.** Navigation system comprising:

an automaton (1) comprising:

- a displacement device (6) for displacing said automaton in an environment,
- at least one marker detector (12) configured to detect markers (4) in the proximity of said automaton,

- a controller (20) configured to memorise, for each of said markers, data relating to position and optionally predetermined attributes; said attributes characterising deviations in the motion of the automaton (1), said controller (20) being configured to implement the following steps repeatedly:

(a) estimating the position of said automaton relative to said markers on the basis of a previously estimated position, data representative of the displacement of said automaton (1) and a mathematical motion estimation function;
(b) commanding said displacement device as a function of the estimated position;
(c) detecting, by means of the marker detector, the presence of a marker (4), and
(d) on said detection of a marker (4), updating said estimated position on the basis of data of said marker detector (12) and memorised data relating to the position of said detected marker (4);
(e) on a successive detection of at least two markers (4) having a same attribute predetermined from at least two different possible attributes, modifying said mathematical motion estimation function on the basis of an attribute of said detected markers and said position update in step (d).

5. System as claimed in claim 4, further comprising at least one motion sensor (10; 11).

6. System as claimed in any one of claims 4 to 5, in which the controller (20) belongs to the automaton.

7. System as claimed in any one of claims 4 to 6, in which the marker detector (12) comprises an optical sensor, in particular a sensor with a laser transmitter.

8. System as claimed in any one of claims 4 to 7, in which the marker detector (12) is a magnetic sensor, in particular an induction magnetic sensor or a Hall-effect sensor.

9. System as claimed in any one of claims 4 to 8, in which said correction is based on a difference between the estimated position prior to updating and the estimated position after updating.

10. System as claimed in any one of claims 4 to 9, further comprising a set of markers (4) disposed on the ground at predetermined positions in the environment (2), the controller (20) having in memory, for each of said markers, data relating to the positions of the markers (4) and relating to at least one attribute, at least two markers having a different attribute.

11. System as claimed in claim 10, in which each marker (4) is an optical reflector.

12. System as claimed in any one of claims 10 to 11, in which the set of markers (4) comprises at least one sub-set of markers (4), each of the markers (4) in said sub-set having a same attribute as a function of the spacing between said markers (4) of said sub-set.

FIG.1.

FIG.2.

FIG.3.

FIG.4.

FIG.5.

FIG.6

EP 2 326 999 B1

FIG.7.

**RÉFÉRENCES CITÉES DANS LA DESCRIPTION**

**Documents brevets cités dans la description**

- US 2006235609 A
- US 2007260371 A

- DE 3923458